# EUROPEAN PATENT SPECIFICATION

(11) **EP 0 734 690 B1**
(45) Date of publication and mention of the grant of the patent: **18.06.2003**
(21) Application number: 96830147.3
(22) Date of filing: 26.03.1996
(51) Int. Cl.: A61C 1/00, H03K 17/96

(54) **A system for controlling function selectors, in particular applicable on dental apparatus**
System zur Steuerung von Funktionsseelektoren, insbesondere verwendbar in zahnärztlichen Geräten
Système pour contrôler des sélecteurs de fonction, en particulier dans les appareils dentaires

(30) Priority: 27.03.1995 IT BO950134
(43) Date of publication of application: 02.10.1996
(73) Proprietor: CASTELLINI S.p.A., I-40013 Castel Maggiore (Bologna) (IT)
(72) Inventor: Castellini, Franco, 40123 Bologna (IT)
(74) Representative: Lanzoni, Luciano

(56) References cited:
- WO-A-86/01953
- DE-A- 3 526 992
- US-A- 5 103 085

## Description

The present invention relates to a system for controlling function selectors, in particular applicable on dental apparatus.

In the sector for the development of the afore-mentioned dental apparatus, that is to say, the known dental units, it has become increasingly necessary to find solutions suitable for selectors (otherwise known as pushbuttons) for activation and for the selection of main and accessory operating units (i.e.: handpieces, air and water supply to the handpieces and the rinsing tumbler, etc.) and which, as a whole, allow ease of use and both safety and hygiene in the activation movement.

There are various solutions in this sector, which also depend on the type of overall control system fitted on the dental unit: manufacturers are currently inclined to exploit the high technology of microprocessors for total control of the dental unit so that, with time, the activation selectors have changed from the conventional mechanical ON/OFF selectors to the so-called "SOFT TOUCH" selectors which adopt a system of electrical contacts which activate electronic activation and selection devices connected to the microprocessor. However, these systems do not guarantee the hygiene now required by the user, since the "physical" contact between the surface of the selector and the dental surgeon or assistant's hand may convey pollutants, meaning that such surfaces must be systematically cleaned for each patient to avoid the risk of contamination.

A further technological development on this subject is the use of selectors of the "NO TOUCH" type (see, for example, patent EP - 391.967): that is to say, devices which thanks to the generation of light barriers (infrared or ultraviolet), which intersect on an X and Y grid, allow the creation of activation points where the barriers intersect. These devices, having an emitter and receiver set opposite one another, are used directly on a viewer upon which the functions to be activated are illustrated: in this way, the dental surgeon moves a finger towards an intersection between two light barriers, guided by the icon below on the viewer, covering the relative rays at the intersection in question, thus activating, by the selection effected by the microprocessor which has the relative intersections stored in its memory, the corresponding function on the dental unit.

If such a system on one hand tends to eliminate the problem of physical contact between the selector and finger, on the other hand, it complicates the activation operation for the dental surgeon, who is obliged to look at the viewer and carefully move towards the intersection so as to avoid erroneous selections and even unwanted contact (due to contamination) with the viewer below.

The object of the present invention is, therefore, to eliminate the afore-mentioned disadvantages by creating a hygienic system for controlling function selectors on dental apparatus, the system being easy to check visually, with safe, fast activation of the dental unit.

The technical features of the present invention, in accordance with the aforesaid objects, are clearly illustrated in the claims herein, and the advantages of the said features are more clearly described in the detailed description below, with reference to the accompanying drawings, which illustrate an embodiment by way of example only, and in which:
- figure 1 is a block diagram of the system for controlling function selectors disclosed;
- figure 2 is a top view of a schematic detail with some parts cut away to better illustrate others, showing a hypothetical activation situation for selectors fitted with the system disclosed.

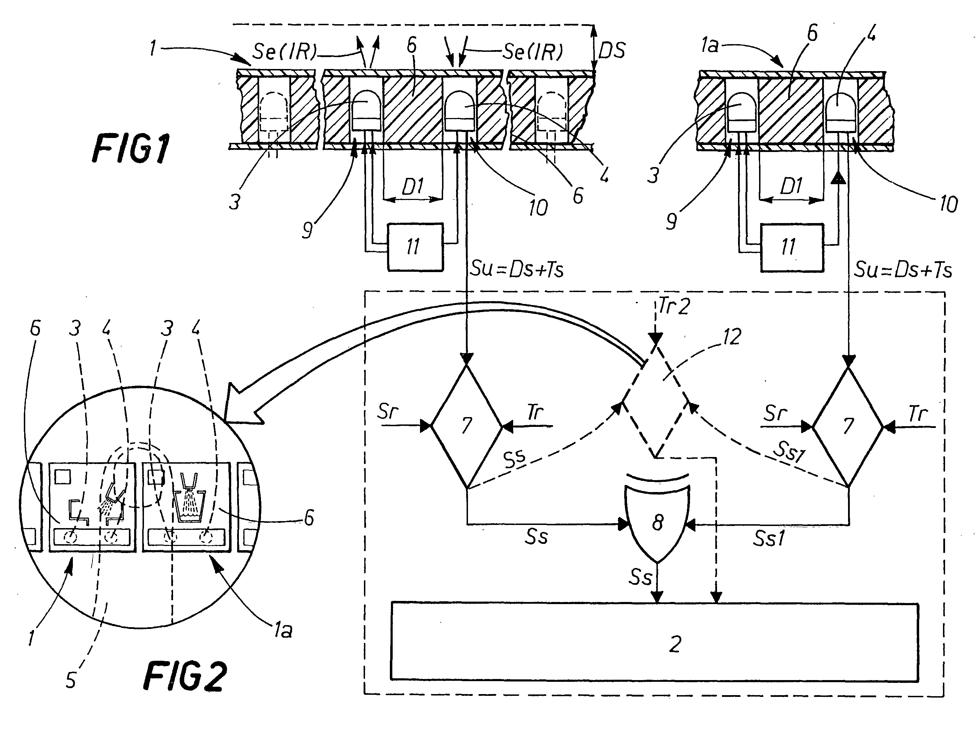

With reference to the accompanying drawings, and especially figure 1, the system for controlling function selectors 1 disclosed is adopted on dental apparatus such as dental units, the design concept being of the type known by the term "NO TOUCH", that is to say, controlled without contact.

These selectors (1) activate various types of functions on the main or accessory parts of the dental unit (lamp, chair, water supply to rinsing tumbler, etc.), and are connected to a microprocessor 2 (in the latest versions) which activates the afore-mentioned functions.

As is clearly shown in figure 1, each selector 1 includes an emitter 3 of a relative electromagnetic signal Se and a receiver 4 for the said signal, which is transformed into an output signal Su that can be sent to the microprocessor 2 (both being powered by a power unit 11). In this case, the emitter 3 and receiver 4 are set in the infrared IR band.

In the case shown in figure 1, each emitter 3 and receiver 4 for the signal Se are housed in a single body 6 defining a single selector 1 and are separate and shielded from one another. More precisely, the body 6 has two through seats 9 and 10, vertical and parallel with one another, in which the respective emitters 3 and receivers 4 are placed, their bases being connected to the power unit 11 and the microprocessor 2; to obtain a given shield between the two elements 3 and 4, the seats 9 and 10 are set at a given distance D1 from one another so that the said shield is formed by the material of the body 6, preventing the receiver 4 from "reading" the signal normally generated and present at the output of the emitter 3.

As shown, again in figure 1, the signal Se is detected by the receiver 4 when a reflective surface 5 is moved towards the emitter 3 and receiver 4 within a threshold distance which can be preset, labelled Ds in the figure; in this case, the reflective surface 5 is the dental surgeon or assistant's hand, or rather, finger.

A comparator 7 (threshold circuit) for the said output signal Su from the receiver 4 is connected to each selector 1. The comparator checks the signal Su, then sends a relative selection signal Ss to the microprocessor 2. The check on the output signal Su is effected according to two parameters: the value of the output signal Su equal to or greater than a reference signal Sr which can be preset on the comparator 7 and a dwell time Ts for the output signal Su equal to a reference time Tr stored on the comparator 7.

If these parameters are satisfied, the comparator 7 sends the said selection signal Ss to a selection signal discriminator 8. The discriminator 8 is required in order to inhibit the selection signal towards the microprocessor 2 in the presence of at least two simultaneous selection signals Ss and Ss1 from different and corresponding selectors 1 and 1a, for example, as shown in figure 2 when the dental surgeon's hand is accidentally positioned over two adjacent selectors for a given time: this means that the microprocessor 2 is not sent more than one signal accidentally activated by the dental surgeon, but only a clear and distinct signal, that is to say, that actually desired by the dental surgeon.

As clearly shown in figure 1, each comparator 7 and discriminator 8 may be incorporated in the microprocessor 2; it should be noticed that figure 1 shows only two selectors 1 connected to the discriminator 8 and microprocessor 2, yet the system envisages the presence of N selectors and the relative comparators 7 controlled by them, all connected to the discriminator 8 and microprocessor 2.

In the solution described below, the discriminator 8 may be an "exclusive OR" logic circuit, but to further extend the main circuit, the discriminator 8 for the selection signal Ss used could be compared to a second comparator 12 (shown by the dashed line in figure 1) through which the said signal passes in the presence of at least two selection signals Ss and Ss1 from two different selectors 1. This non-inhibition of one of the two selection signals occurs thanks to the presence of a value given by the difference between the two dwell times Ts at input, which must be at least equal to a second reference time Tr2 that can be programmed on this discriminator - comparator 12.

Obviously, the selection signal Ss which goes to the microprocessor 2 is the signal at the input of the discriminator - comparator 12 with the longest dwell time Ts of the two signals.

Such a solution allows the prevention of the dental surgeon from placing his/her hand over two adjacent selectors 1 and 1a, but without completely blocking the arrival of the desired signal at the microprocessor.

This system, therefore, completely fulfils the preset objects, thanks to the fact that the structure of the selector is simple, yet precise and always immediately leads to activation of the function required by the dental surgeon.

Each selector can be adjusted so that it is triggered at a given point, that is to say, the threshold distance Ds is preset to provide the optimum focal distance for the receiver, which must be neither too far from nor too close to the selector, so that it is definitely within the "NO TOUCH" category.

The time for activation of the selector refers to a dwell time of the reflective surface over the selector (i.e.: the choice made by the dental surgeon), within a given value so as to avoid unwanted activation, for example, when passing over the selector zone with the hand or an instrument. Moreover, the discriminator inhibits the activation of two commands between two pushbuttons or, alternatively, inhibits activation of the selector with a greater dwell time. Obviously, the distance of the reflective surface from the selector and the times referred to above are numerically and dimensionally reduced to centimetres and fractions of a second, so as to make the system effective, with a fast response and extremely rapid selection of the activation requested by the dental surgeon.

## Claims

1. A system for controlling function selectors (1) on dental apparatus, each selector (1) being connected to a microprocessor (2) for the activation of the said functions and each selector (1) including at least an emitter (3) of a relative electromagnetic signal (Se) and a receiver (4) for the said signal (Se) which can be transformed into an output signal (Su) that can be sent to the microprocessor (2), wherein
- each emitter (3) and receiver (4) for the said signal (Se) being housed in a single body (6) defining a single selector (1), being separate and shielded from one another, the signal (Se) being detected by the receiver (4) when a reflective surface (5) is moved towards the emitter (3) and receiver (4) within the threshold distance (Ds);
- wherein there is a comparator (7) for the output signal (Su) from the receiver (4), designed to send a relative selection signal (Ss) to the microprocessor (2) if the value of the said signal (Su) is equal to or greater than a reference signal (Sr) which can be preset on the comparator (7) and at least a preset dwell time (Ts) for the output signal (Su) at least equal to a reference time (Tr); and wherein
- there is a discriminator (8) for the said selection signal (Ss) from the comparator (7) designed to at least inhibit the selection signal (Ss) towards the microprocessor (2) in the presence of at least two simultaneous selection signals (Ss) from different and corresponding selectors (1).

2. The system according to claim 1, **characterised in that**, the emitter (3) and receiver (4) are set in the infrared (IR) band.

3. The system according to claim 1, **characterised in that**, each comparator (7) and discriminator (8) are incorporated in the microprocessor (2).

4. The system according to claim 1, **characterised in that**, the body (6) has two through seats (9, 10), vertical and parallel with one another, in which the respective emitter (3) and receiver (4) are placed; said seats (9, 10) being separated by a distance (D1) designed to define the said shield between the elements.

5. The system according to claim 1, **characterised in that**, the discriminator (8) for the selection signal (Ss) consists of a second comparator (12) designed to allow the passage of the said signal in the presence of at least two such selection signals (Ss, Ss1) from two different selectors (1) in the presence of a value, given by the difference between the two dwell times (Ts), at least equal to a second reference time (Tr2); the selection signal (Ss) which reaches the microprocessor (2) being the signal with the longest dwell time (Ts) of the two.

## Patentansprüche

1. System zur Steuerung von Funktionselektoren (1) in zahnärztlichen Geräten, wobei jeder Selektor (1) an einen Mikroprozessor (2) zur Aktivierung der genannten Funktionen angeschlossen ist und jeder Selektor (1) wenigstens einen Emitter (3) eines entsprechenden elektromagnetischen Signals (Se) enthält, sowie einen Empfänger (4) für das genannte Signal (Se), welches in ein Ausgangssignal (Su) umgewandelt und an den Mikroprozessor (2) gesendet werden kann,
bei welchem jeder Emitter (3) und Empfänger (4) des genannten Signals (Se) in einem einzigen Körper (6) aufgenommen ist, und zwar einen einzelnen Selektor (1) beschreibend und voneinander getrennt und abgeschirmt, wobei das Signal (Se) durch den Empfänger (4) erfasst wird, wenn sich eine reflektierende Oberfläche (5) innerhalb eines Schwellenabstandes (Ds) in Richtung des Emitters (3) und des Empfängers (4) bewegt;
bei welchem ein Komparator (7) für das Ausgangssignal (Su) von dem Empfänger (4) vorhanden ist, dazu bestimmt, ein entsprechenden Wahlsignal (Ss) an den Mikroprozessor (2) zu senden, wenn der Wert des genannten Signals (Su) gleich oder grösser als ein Bezugssignal (Sr) ist, das an dem Komparator (7) voreingestellt werden kann, und wenigstens eine vorgegebene Verweilzeit (Ts) für das Ausgangssignal (Su), die wenigstens gleich einer Bezugszeit (Tr) ist; und
bei welchem ein Diskriminator (8) für das genannte Wahlsignal (Ss) von dem Komparator (7) vorhanden ist, dazu bestimmt, bei Vorhandensein von wenigstens zwei gleichzeitigen Wahlsignalen (Ss) von verschiedenen und entsprechenden Selektoren (1) wenigstens das Wahlsignal (Ss) zu dem Mikroprozessor (2) hin zu verhindern.

2. System nach Patentanspruch 1, **dadurch gekennzeichnet, dass** der Emitter (3) und der Empfänger (4) in einem Infrarotband IR eingestellt sind.

3. System nach Patentanspruch 1, **dadurch gekennzeichnet, dass** jeder Komparator (7) und jeder Diskriminator (8) in den Mikroprozessor (2) eingebaut sind.

4. System nach Patentanspruch 1, **dadurch gekennzeichnet, dass** der Körper (6) zwei durchgehende, vertikal und parallel zueinander angeordnete Sitze (9, 10) aufweist, in welche der jeweilige Emitter (3) und Empfänger (4) eingesetzt werden; wobei die genannten Sitze (9, 10) um einen Abstand (D1) voneinander getrennt sind, der dazu dient, die genannte Abschirmung zwischen den Elementen zu bilden.

5. System nach Patentanspruch 1, **dadurch gekennzeichnet, dass** der Diskriminator (8) für die Wahlsignale (Ss) aus einem zweiten Komparator (12) besteht, dazu bestimmt, das Durchlaufen des genannten Signals bei Vorhandensein von wenigstens zwei solcher Wahlsignale (Ss, Ss1) von zwei verschiedenen Selektoren (1) zu erlauben, wenn ein Wert vorhanden ist, gegeben durch die Differenz zwischen den beiden Verweilzeiten (Ts), der wenigstens gleich einer zweiten Bezugszeit (Tr2) ist; wobei das Wahlsignal (Ss), welches an den Mikroprozessor (2) gelangt, von den beiden das Signal mit der längsten Verweilzeit (Ts) ist.

## Revendications

1. Un système pour contrôler des sélecteurs de fonction (1) dans des appareils dentaires, chaque sélecteur (1) étant connecté à un microprocesseur (2) pour l'activation desdites fonctions et comprenant au moins un émetteur (3) d'un signal électromagnétique correspondant (Se) ainsi qu'un récepteur (4) dudit signal (Se), lequel peut être transformé en un signal de sortie (Su) qui peut être envoyé au microprocesseur (2), où chaque émetteur (3) et récepteur (4) dudit signal (Se) sont logés dans un seul corps (6) définissant un seul sélecteur (1) à l'intérieur duquel ils sont séparés et isolés l'un de l'autre par un blindage, ledit signal (Se) étant détecté par le récepteur (4) lorsqu'une surface réfléchissante (5) s'approche de l'émetteur (3) et du récepteur (4) à l'intérieur d'une distance limite (Ds) ; où un comparateur (7) est prévu pour le signal de sortie (Su) du récepteur (4), afin d'envoyer un signal de sélection (Ss) correspondant au microprocesseur (2) si la valeur dudit signal de sortie (Su) est égale ou supérieure à un signal de référence (Sr), qui peut être préréglé sur le comparateur (7) et si au moins un temps de maintien préréglé (Ts) du signal de sortie (Su) est au moins égal au temps de référence (Tr) ; et où un discriminateur (8) est prévu pour ledit signal de sélection (Ss) provenant du comparateur (7), afin d'au moins inhiber le signal de sélection (Ss) dirigé vers le microprocesseur (2) en présence d'au moins deux signaux de sélection (Ss) simultanés provenant de différents sélecteurs (1) correspondants.

2. Le système selon la revendication 1, **caractérisé en ce que** l'émetteur (3) et le récepteur (4) sont réglés dans la bande infrarouge (IR).

3. Le système selon la revendication 1, **caractérisé en ce que** chaque comparateur (7) et discriminateur (8) sont incorporés dans le microprocesseur (2).

4. Le système selon la revendication 1, **caractérisé en ce que** le corps (6) est doté de deux logements débouchants (9, 10) verticaux et parallèles entre eux, dans lesquels sont placés l'émetteur (3) et le récepteur (4) respectifs ; lesdits logements (9, 10) étant séparés par une distance (D1) prévue pour définir ledit blindage entre les éléments.

5. Le système selon la revendication 1, **caractérisé en ce que** le discriminateur (8) pour le signal de sélection (Ss) consiste en un second comparateur (12) prévu pour permettre le passage dudit signal en présence d'au moins deux signaux de sélection (Ss, Ss1) provenant de deux sélecteurs (1) différents et en présence d'une valeur, donnée par la différence entre deux temps de maintien (Ts), au moins égale à un second temps de référence (Tr2) ; le signal de sélection (Ss) appliqué au microprocesseur (2) étant le signal dont le temps de maintien (Ts) est le plus long des deux.
